# EUROPEAN PATENT SPECIFICATION

(11) **EP 2 119 278 B1**
(45) Date of publication and mention of the grant of the patent: **28.10.2015**
(21) Application number: 07709344.1
(22) Date of filing: 12.02.2007
(51) Int. Cl.: H04W 76/02

(54) **NETWORK POOLING IMPROVEMENT**
NETZWERK-POOLING-VERBESSERUNG
AMÉLIORATION DE LA MISE EN COMMUN D'UN RÉSEAU

(43) Date of publication of application: 18.11.2009
(73) Proprietor: Telefonaktiebolaget L M Ericsson (publ), 164 83 Stockholm (SE)
(72) Inventor: PERSSON, Bengt G, S-168 66 Bromma (SE)
(74) Representative: Ericsson
(86) International application number: PCT/SE2007/000129
(87) International publication number: WO 2008/100184

(56) References cited:
- WO-A1-01/24557
- WO-A1-03/019958
- WO-A1-03/088695
- WO-A1-2005/060297
- WO-A2-02/37866

## Description

### TECHNICAL FIELD

The present invention is related to a method and apparatus for configuring links in a general telecommunication system.

### BACKGROUND

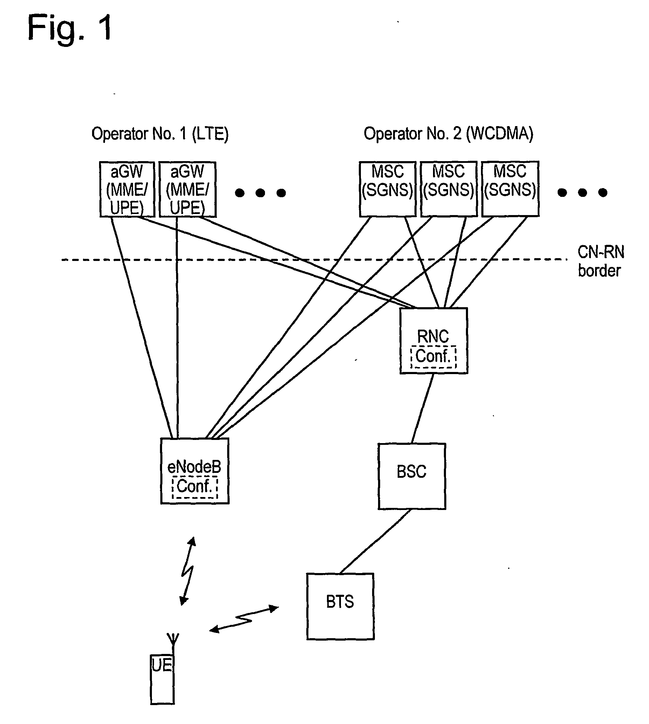

In mobile networks, also called cellular networks that are based on 3GPP (3rd Generation Partnership Program) technology such as GSM (Global System for Mobile communication) and WCDMA (Wideband Code-Division Multiple Access) a function has been added that allows multiple CN (Core Network) nodes of the same kind, the nodes called e.g. MSCs (Mobile Switching Centers), SGSNs (Serving GPRS Support Nodes) or MMEs/UPEs (Mobility Management Entities/User Plane Entities), also denoted as aGWs (access GateWays), to attach to a RN (Radio Network) controlling node, such a node called e.g. an RNC (Radio Network Controller), a BSC (Base Station Controller), or base stations having the required radio network functions, such nodes called eNodeBs (enhanced Node Bs, B as in Base station) according to the 3GPP project LTE (Long Term Evolution), see Fig. 1. The function is part of e.g. concepts called "Iu-Flex" (Interface "umts" - Flexible), "MSC in pool", "SGSN in Pool", or "Multi operator Core Network". The purpose is to provide network redundancy and load sharing between core networks or to allow multiple core network operators to share radio network infrastructure.

The RN node, herein generally called radio node, decides which core network node should get a call. As only one core network has the data for the subscriber, such as in a VLR (Visitor Location Register), a selection of a core network node in any other core network will either result in a failure or retries.

Control of which call is directed to which core network node is made through synchronized configuration data in the radio network nodes and core network nodes. Each radio network node contains a mapping between identifiers sent by the mobile terminal or mobile unit (UE), such an identifier being e.g. an NRI (Network Resource Identifier), a subset of the TMSI (Temporary Mobile Subscriber Identifier), and which core network node to use for calls originating from or terminated by this mobile terminal/UE (User Equipment). The core network node in turn is configured to only allocate such identifiers in the range or ranges as specified in the configuration data.

A problem with commonly used methods is that they require configuration of this mapping information in the radio network nodes and coordination of the mapping information with corresponding information in the core network nodes.

As the nodes involved often come from different manufacturers, possibly are operated by several different organizations and there may be multiple nodes on each side of the CN- RN border affected by each change, this configuration handling may become a serious obstacle. If the mapping information in all radio network nodes does not match the information in the core network nodes, calls will fail.

For traditional network design the manual configuration as commonly used may not be too restricting. As an example a network including 10M subscribers and 10 MSCs, 10 SGSNs and 20 RNCs would, if each RNC is connected to 2 MSCs and 2 SGSNs, for network redundancy, have in total 80 CN-RN relations to manage, such relations also called links herein. However, a corresponding LTE network, having 40 aGWs (access Gateways, core network nodes for networks according to the LTE project) and 5 000 LTE eNodeBs in one pool, would have up to 200 000 relations to manage. With radio network sharing, and more extensive load sharing between "smaller" CN nodes, the number will grow even higher.

WO 03/019958 relates to method and means for a system initiated subscriber information redistribution in order to achieve a load redistribution within a pool of core network nodes. The subscribers, that are affected by the redistribution, are determined by the bit values in their TMSI's. These specific TMSI's are then arranged to be treated as invalid by the cellular system. Messages etc. from subscribers with invalid TMSI's will be "trapped" in the cellular system and the subscriber information that belongs to these subscribers will be redistributed to new core network nodes.

### SUMMARY

It is an object of the invention to provide an efficient method of configuring links between core network nodes and radio nodes in a general telecommunication system.

The coordination and configuration complexity is reduced by adding, to signals from the core network nodes to the radio nodes, the identity ranges, e.g. the ranges of the NRI, which the respective core network node allocates or for which is acts as a server, or generally information about the identity or identifiers of those subscribers or of their mobile stations for which calls are to be directed to a specific core network node. The radio nodes can then use this information to direct traffic to the correct core network node.

This information is signaled when needed, e.g. at establishment of a signaling relation between a radio node and a core network node. Coordination of identities is then isolated to each core network. The radio nodes are the nodes that must hold such configuration data for the links into the respective core network and may typically include e.g. RNCs and eNodeBs.

Additional objects and advantages of the invention will be set forth in the description which follows, and in part will be obvious from the description, or may be learned by practice of the invention. The objects and advantages of the invention may be realized and obtained by means of the methods, processes, instrumentalities and combinations particularly pointed out in the appended claims.

### BRIEF DESCRIPTION OF THE DRAWINGS

While the novel features of the invention are set forth with particularly in the appended claims, a complete understanding of the invention, both as to organization and content, and of the above and other features thereof may be gained from and the invention will be better appreciated from a consideration of the following detailed description of non-limiting embodiments presented hereinbelow with reference to the accompanying drawings, in which:
- Fig. 1 is a schematic of a general telecommunication system having multiple operators and nodes and signaling according to various standards,
- Fig. 2 is a schematic similar to that of Fig. 1 in which special setup signaling/configuration signaling is included,
- Fig. 3 is a block diagram of a core network node for use in the system of Fig. 2, and
- Fig. 4 is a block diagram of a radio network control node for use in the system of Fig. 2.

### DETAILED DESCRIPTION

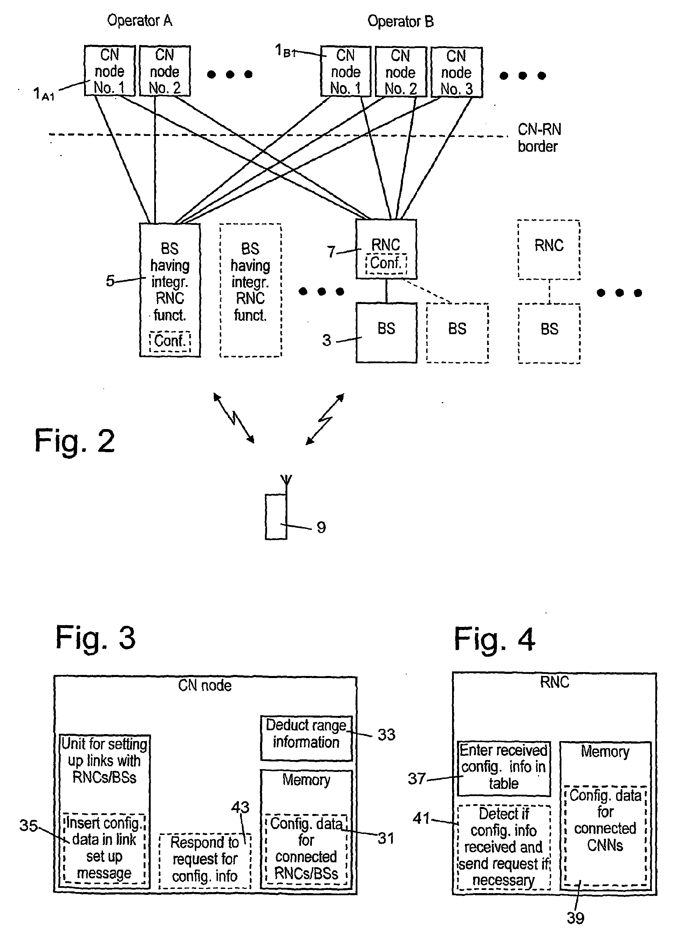

Fig. 2 is a schematic of a general telecommunication system in which operators A and B are active which own core network nodes 1_{A1}, 1_{A2}, ... and 1_{B1}, 1_{B2}, 1_{B3}, ..., respectively. In the system there are multitude of base stations 3, 5. Some (3) of the base stations are connected to core network nodes through radio network control nodes 7 and others (5) have the functionality of the radio network control nodes integrated in themselves and are thus directly connected to the core network nodes. Between the core network nodes and the base stations/radio network control nodes is the CN-RN interface or border located, the links between the core network nodes and the base stations/radio network control nodes thus crossing this border. The links are logical connections for which protocol data/configuration data are stored at each end of the respective link. A mobile station 9, also called mobile terminal, mobile unit or user equipment, can wirelessly communicate with the base stations and through them to the radio network controllers or control nodes, if used, and further through the core network nodes. The mobile stations all have unique identities or identifiers, fixed or temporary, called e.g. TMSIs, for use in the general system.

The owner of each mobile station 9 is assumed to have a subscription with one of the operators A, B or to an operator cooperating with either one of or with both the operators A and B. When the owner makes a call on his mobile station, it connects to one of the base stations 3, 5, sending i.a. the unique identity of the mobile station. The base station forwards the identity information to its associated radio network control node, in the case where the required functionality is not integrated in the base station. The radio network control node or the functionality corresponding thereto analyzes the identity information using configuration data stored therein. In the analysis it deduces the operator for which the owner of the mobile station has a valid subscription and it also in this operation deduces which one of the core network nodes through which the call will be connected. Then it establishes a connection, also called communication path, over the link between the mobile station 9 and this core network node from which the call is further routed to the destination of the call.

The configuration information can be organized as a list or table, e.g. as outlined in Table 1 below.

**Table 1**

| | |
|---|---|
| Range 1 of rel. part of MS identifier | Operator A, parameter set 1, control network node 1, cooperating operator C |
| Range 2 of rel. part of MS identifier | Operator A, parameter set 2, control network node 2 |
| Range 3 of rel. part of MS identifier | Operator A, parameter set 3, control network node 3 |
| | |
| | |
| | |

Thus, in the table are listed for the different possible ranges of some relevant part of the unique identities or identifiers of the mobile stations 9, the operator that the part within the ranges indicate, the associated parameters to be used in the communication and the control network node with which a communication path will established for the call from the mobile station 9. Also, a cooperating operator may, if desired, be included as will be described below.

As long as the nodes on one side of the CN-RN interface, this interface called e.g. A, Iu, S1 in different standards, interact only with a small number of node on the other side, and the total number of nodes is limited, manual configuration methods as previously used can be considered adequate. In a manual configuring operation the information necessary to route calls to the correct core network, such as in Table 1, is entered manually when e.g. starting the total network or preferably some portion thereof such as when setting up a new link between a base station or radio network control node and a core network node.

However, for a successful introduction of an MOCN (Multi-Operator Core Network), called aGW Pooling in the LTE project, or of usage of large and overlapping pools in GSM and WCDMA networks, most of the manual configuration coordination has to be eliminated. Reasons are both to eliminate manual work and to remove an error source which might introduce more service disturbances than saved by the introduction of network redundancy.

When a new link is to be set up between a base station/radio network control node and a core network node, information is transferred from the respective core network node to the base station/radio network control node in a link setup message sequence. By adding an identity range or possibly a plurality of identity ranges corresponding to Range 1, Range 2, ... in Table 1, or generally some information of selected or allowed identities or identifiers, to such a CN-RN signaling link setup message sequence the coordination and configuration complexity can be eliminated. The identity ranges can e.g. be specified as ranges of NRIs. The core network nodes can in most cases be provided with a unit or function to deduct the identity ranges which they are allowed to allocate, i.e. for which they are allowed to set up a call, and/or for which they act as a server.

The base stations/radio network control nodes can then enter this information among other configuration data and use it to direct traffic to the correct core network node.

For performing this function the core network nodes may have the range information stored in a memory place 31, or alternatively a function or unit 33 to deduct such range information, and a module 35 for entering all information necessary for a record in the configuration table, in a link setup message, see Fig. 3. The radio network control nodes/integrated base stations may have a function or unit 37 for entering the configuration information among other configuration data in a record of a configuration table stored in a memory place 39, see Fig. 4. If desired, the radio network control nodes/integrated base stations may e.g. be provided with a function or unit 41 for checking that configuration information has been received in a link setup operation and to signal to the core network node a request for configuration information in the case where no such information has been received. Then the core network nodes must have some function or unit 43 for responding to such a request by sending the required information, e.g. in a link setup message.

The information may be used in a similar way as configured information has been used previously. Furthermore it may be combined with existing filtering and weighing mechanisms

Thus, the information about allowed ranges for the respective core network node can be extended with information on filtering or weighing. Such additional information can e.g. include:
- the proportion of un-routable calls to give each core network node, a number representing this proportion e.g. being included in the parameter set discussed with reference to Table 1. Otherwise this proportion could be implicit from the range size of each core network node.
- extending the signaling with "preferred CN operator for these subscriber PLMN (Public Land Mobile Network) identifiers" would simplify MOCN configuration. Such information could then be entered in Table 1, e.g. as the information "cooperating operator C" seen in the first record.

The absence of a range in a configuration record could imply "all possible values", and the presence of explicit signaled ranges would take precedence over already configured values in the radio network node/base station which in turn would take precedence over an implicit "all possible values" range.

The coordination of ranges/identities is isolated to the respective core network, and in most cases the information is part of coordination and configuration required for other purposes, e.g. the TMSI range definition.

To avoid reset of signaling links when ranges are changed, update information may be sent regularly and/or after changes. The ranges, or generally the information of identifiers or identities of mobile stations for the calls of which routing through the respective core networks is to be made, are e.g. signaled at establishment of a signaling relation between a radio network control node and a core network node, i.e. when establishing the links over the CN-RN border as discussed above. Also, when a link has changed or in particular when the routing information or routing range has changed or is to be changed, due to e.g. the fact that one of the core network nodes is in failure and cannot route calls or that a new core network node has been added or due to merely a redisposition of the calls to give a more adequate, such as more equal, sharing or distribution of calls between the core network nodes.

As have been discussed above, the current practice for handling configuration these identity ranges is to use manual configuration, or possibly in a few cases, single vendor/singe operator configuration tools.

As long as the number of nodes on the other side of the CN-RN border with which each node interacts is small and especially if the total number also is small, manual configuration methods as commonly used are adequate. A successful introduction of MOCNs (Multi-Operator Core Networks) or aGW Pooling in the project LTE, or even usage of large and overlapping pools in GSM and WCDMA networks, will require that most of the manual configuration coordination has to be eliminated.

The reason for eliminating the manual coordination work is partly to reduce the amount of work required to operate the network, but even more to remove an error source. Non matching ranges in core network and radio network nodes might introduce service disturbances, e.g. an increased rate of failed call set-up for the user equipments. It can be difficult to detect mismatches and such mismatches can easily eliminate the increased performance expected from the use of network redundancy and pooling.

The method as described herein can be easily implemented in new and existing networks, since it is compatible with existing operational practices, existing mobile stations/UEs, existing services and allows a phased introduction where advantages will be seen as soon as a single pair of nodes on each side of the CN-RN interface has introduced the capability.

With the ranges sent as a part of ordinary signaling, current procedures for ensuring interoperability between node vendors secures that the method can be easily used in multi-vendor environments.

There are other potential methods that could be used to eliminate the manual coordination:
- Use of configuration tools which are active toward all involved nodes to configure the key information.
- "Try all" core network nodes and choose the one giving the best result.
- To change the principles for selecting the core network node, eliminating the need for coordination.

The first method that can be called O&M coordination is troublesome as it requires both multi-vendor and inter-operator interactions. The lack of commonly accepted multi-vendor O&M infrastructure is an obstacle to using this method in multi-vendor environments, and the fact that operators do not easily give configuration privileges to accounts of other operators, even if they are cooperating, would block it in MOCN cases.

Changing the principles for selecting CN nodes will most likely have effect on at least the air interface, implying that this function would not work for current mobile terminals/UEs.

The key disadvantage with the "Try all" method is that the signaling and processing for call set-up and LA updates etc. will increase, almost in proportion to the number of configured core network nodes.

As a conclusion it can be found that both current practice and the alternative solutions have serious disadvantages. The method as described herein is both simple, scales well and works in all expected network scenarios.

While specific embodiments of the invention have been illustrated and described herein, it is realized that numerous other embodiments may be- envisaged and that numerous additional advantages, modifications and changes will readily occur to those skilled in the art without departing from the spirit and scope of the invention. Therefore, the invention in its broader aspects is not limited to the specific details, representative devices and illustrated examples shown and described herein. Accordingly, various modifications may be made without departing from the spirit or scope of the general inventive concept as defined by the appended claims and their equivalents. It is therefore to be understood that the appended claims are intended to cover all such modifications and changes as fall within a true spirit and scope of the invention. Numerous other embodiments may be envisaged without departing from the scope of the invention.

## Claims

1. A method of configuring, in a telecommunication system including core network nodes and radio nodes, each of the radio nodes connected to a plurality of the core network nodes and having configuration data for links between the radio node and each of the core network nodes to which it is connected, the configuration data including information on which of said core network nodes is to be used when the radio node receives a request for a call from a mobile station and is to set up a communication path through the radio node wherein when one of said links is setup or changed, configuration information for the link is sent from the core network node at one end of the link to the radio node at the opposite end of the link, **characterized in that** said configuration information sent from one of the core network nodes includes identity ranges of mobile stations for which calls received from them are to be routed from the respective radio node to said one of the core network nodes.

2. A method according to claim 1, **characterized in that** said configuration information is included in a regular sequence of link set up messages, the method thereby allowing compatibility with existing products and a simple use.

3. A method according to claim 1, **characterized in that** said configuration information sent from one of the core network nodes includes information on the proportion of un-routable calls to be routed from the respective radio node to said one of the core network nodes.

4. A radio node in a telecommunication system including a plurality of core network nodes and having configuration data for links between the radio node and each of the core network nodes to which it is connected, the configuration data including information on which of said core network nodes is to be used when the radio node receives a request for a call from a mobile station and is to set up a communication path through the radio node, a unit for storing, when one of said links is setup or changed, received configuration information for the link that is sent from the core network node at the other end of the link **characterized in that** said configuration information includes identity ranges of mobile stations for which calls received from them are to be routed from the respective radio node to the core network node.

5. A radio node according to claim 4, **characterized by** a memory place in which a table is stored, the table holding, for each of the core network nodes to which the radio node is connected, information on ranges of identities or identifiers of those mobile stations, for which mobile stations calls received from them are to be routed through the radio node to the core network node, said unit for storing being arranged to store the received configuration information in the memory place in a respective record in the table.

6. A radio node according to claim 4, **characterized by** a detecting unit for detecting whether new configuration data has been received after one of said links has been setup or changed.

7. A core network node in a telecommunication system including a plurality of core network nodes and a plurality of radio nodes, each of the radio nodes having configuration data for links between the radio node and the core network node, the configuration data including information on the cases in which the core network node is to be used when the radio node receives a request for a call from a mobile station and is to set up a communication path through the radio node, a unit for sending, when one of said links between the core network node and one of the radio nodes is setup or changed, configuration information for the link to said one of the radio network node, **characterized in that** the sending unit is arranged to include in the sent configuration information on ranges of identities or identifiers of those mobile stations, for which mobile stations calls received from them are to be routed through said one of the radio nodes to the core network node.

8. A core network node according to claim 7, **characterized in that** the sending unit is arranged to send the configuration information in a regular sequence of link set up messages.

9. A core network node according to claim 8, **characterized by** a memory place in which a table is stored, the table holding, for each of the radio nodes to which the core network node is connected, information on ranges of identities or identifiers of those mobile stations, for which mobile stations calls received from them are to be routed through the respective radio node to the core network node.

10. A core network node according to claim 8, **characterized by** a deducting unit for deducting, for each of the radio nodes to which the core network node is connected, information on ranges of identities or identifiers of those mobile stations, for which mobile stations calls received from them are to be routed through the respective radio node to the core network node.

11. A method of configuring, in a telecommunication system including core network nodes and radio nodes, each of the radio nodes connected to a plurality of the core network nodes and having configuration data for links between the radio node and each of the core network nodes to which it is connected, the configuration data including information on which of said core network nodes is to be used when the radio node receives a request for a call from a mobile station and is to set up a communication path through the radio node, when one of said links is setup or changed, receiving and storing configuration information for the link that is sent from the core network node at the other end of the link, and **characterized in**
storing the received configuration information in a memory place in a respective record in a table, the table holding, for each of the core network nodes to which the radio node is connected, information on ranges of identities or identifiers of those mobile stations, for which mobile stations calls received from them are to be routed through the radio node to the core network node.

12. A method according to claim 11, **characterized in** detecting whether new configuration data has been received after one of said links has been setup or changed.

## Patentansprüche

1. Konfigurationsverfahren in einem Telekommunikationssystem, das Kernnetzknoten und Funkknoten einschließt, wobei jeder der Funkknoten an eine Vielzahl von Kernnetzknoten angeschlossen ist und Konfigurationsdaten für Verbindungen zwischen dem Funkknoten und jedem der Kernnetzknoten hat, an den er angeschlossen ist, wobei die Konfigurationsdaten Information darüber einschließen, welcher der Kernnetzknoten zu verwenden ist, wenn der Funkknoten eine Anforderung für einen Anruf von einer Mobilstation empfängt und einen Kommunikationspfad durch den Funkknoten aufbauen soll, worin, wenn eine der Verbindungen aufgebaut oder geändert wird, Konfigurationsinformation für die Verbindung vom Kernnetzknoten an einem Ende der Verbindung an den Funkknoten am entgegengesetzten Ende der Verbindung gesendet wird, **dadurch gekennzeichnet, dass** die von einem der Kernnetzknoten gesendete Konfigurationsinformation Identitätsbereiche von Mobilstationen einschließt, für die von ihnen empfangene Anrufe vom jeweiligen Funkknoten an den einen der Kernnetzknoten zu routen sind.

2. Verfahren nach Anspruch 1, **dadurch gekennzeichnet, dass** die Konfigurationsinformation in einer normalen Sequenz von Verbindungsaufbaunachrichten eingeschlossen ist, wobei das Verfahren dadurch Kompatibilität mit bestehenden Produkten und eine einfache Verwendung ermöglicht.

3. Verfahren nach Anspruch 1, **dadurch gekennzeichnet, dass** die von einem der Kernnetzknoten gesendete Information Information über die Proportion von nicht routebaren Anrufen einschließt, die von dem jeweiligen Funkknoten an den einen der Kernnetzknoten zu routen sind.

4. Funkknoten in einem Telekommunikationssystem, das eine Vielzahl von Kernnetzknoten einschließt und Konfigurationsdaten für Verbindungen zwischen dem Funkknoten und jedem der Kernnetzknoten hat, an den er angeschlossen ist, wobei die Konfigurationsdaten Information darüber einschließen, welcher der Kernnetzknoten zu verwenden ist, wenn der Funkknoten eine Anforderung für einen Anruf von einer Mobilstation empfängt und einen Kommunikationspfad durch den Funkknoten aufbauen soll, eine Einheit zum Speichern, wenn eine der Verbindungen aufgebaut oder geändert wird, für die Verbindung, von empfangener Konfigurationsinformation, die vom Kernnetzknoten am anderen Ende der Verbindung gesendet wird, **dadurch gekennzeichnet, dass** die Konfigurationsinformation Identitätsbereiche von Mobilstationen einschließt, für die von ihnen empfangene Anrufe vom jeweiligen Funkknoten an den Kernnetzknoten zu routen sind.

5. Funkknoten nach Anspruch 4, **gekennzeichnet durch** einen Speicherplatz, in dem eine Tabelle gespeichert ist, wobei die Tabelle für jeden der Kernnetznoten, an den der Funkknoten angeschlossen ist, Information über Bereiche von Identitäten oder Kennungen derjenigen Mobilstationen enthält, für welche Mobilstationen von ihnen empfangene Anrufe **durch** den Funkknoten an den Kernnetzknoten zu routen sind, wobei die Speichereinheit dazu angeordnet ist, die empfangene Konfigurationsinformation im Speicherplatz in einem jeweiligen Datensatz in der Tabelle zu speichern.

6. Funkknoten nach Anspruch 4, **gekennzeichnet durch** eine Erkennungseinheit, um zu erkennen, ob neue Konfigurationsdaten empfangen wurden, nachdem eine der Verbindungen aufgebaut oder geändert wurde.

7. Kernnetzknoten in einem Telekommunikationssystem einschließlich einer Vielzahl von Kernnetzknoten und einer Vielzahl von Funkknoten, wobei jeder der Funkknoten Konfigurationsdaten für Verbindungen zwischen dem Funkknoten und dem Kernnetzknoten hat, wobei die Konfigurationsdaten Information über Fälle einschließen, in denen der Kernnetzknoten zu verwenden ist, wenn der Funkknoten eine Anforderung für einen Anruf von einer Mobilstation empfängt und einen Kommunikationspfad durch den Funkknoten aufbauen soll, eine Einheit zum Senden, wenn eine der Verbindungen zwischen dem Kernnetzknoten und einem der Funkknoten aufgebaut oder geändert wird, für die Verbindung, von Konfigurationsinformation an den einen der Funknetzknoten, **dadurch gekennzeichnet, dass** die Einheit zum Senden dazu angeordnet ist, in der gesendeten Konfiguration Information über Bereiche von Identitäten oder Kennungen dieser Mobilstationen einzuschließen, für welche Mobilstationen von ihnen empfangene Anrufe durch den einen der Funkknoten an den Kernnetzknoten zu leiten sind.

8. Kernnetzknoten nach Anspruch 7, **dadurch gekennzeichnet, dass** die Einheit zum Senden dazu angeordnet ist, die Konfigurationsinformation in einer regelmäßigen Sequenz von Verbindungsaufbaunachrichten zu senden.

9. Kernnetzknoten nach Anspruch 8, durch einen Speicherplatz gekennzeichnet, in dem eine Tabelle gespeichert ist, wobei die Tabelle für jeden Funkknoten, an den der Kernnetzknoten angeschlossen ist, Information über Bereiche von Identitäten oder Kennungen derjenigen Mobilstationen enthält, für welche Mobilstationen von ihnen empfangene Anrufe durch den jeweiligen Funkknoten an den Kernnetzknoten zu routen sind.

10. Kernnetzknoten nach Anspruch 8, **gekennzeichnet durch** eine Abzugseinheit, um für jeden der Funkknoten, an den der Kernnetzknoten angeschlossen ist, Information über Bereiche von Identitäten oder Kennungen dieser Mobilstationen abzuziehen, für welche Mobilstationen von ihnen empfangene Anrufe **durch** den jeweiligen Funkknoten an den Kernnetzknoten zu routen sind.

11. Verfahren zur Konfiguration in einem Telekommunikationssystem, das Kernnetzknoten und Funkknoten einschließt, wobei jeder der Funkknoten an eine Vielzahl von Kernnetzknoten angeschlossen ist und Konfigurationsdaten für Verbindungen zwischen dem Funkknoten und jedem der Kernnetzknoten hat, an die er angeschlossen ist, wobei die Konfigurationsdaten Information darüber einschließen, welcher der Kernnetzknoten zu verwenden ist, wenn der Funkknoten eine Anforderung für einen Anruf von einer Mobilstation empfängt und einen Kommunikationspfad durch den Funkknoten aufbauen soll, wenn eine der Verbindungen aufgebaut oder geändert wird, zum Empfang und Speichern, für die Verbindung, von Konfigurationsinformation, die vom Kernnetzknoten am anderen Ende der Verbindung gesendet wird, und **gekennzeichnet durch**
Speichern der empfangenen Konfigurationsinformation in einem Speicherplatz in einem jeweiligen Datensatz in einer Tabelle, wobei die Tabelle für jeden der Kernnetzknoten, an den der Funkknoten angeschlossen ist, Information über Bereiche von Identitäten oder Kennungen derjenigen Mobilstationen enthält, für welche Mobilstationen von ihnen empfangene Anrufe **durch** den Funkknoten an den Kernnetzknoten zu routen sind.

12. Verfahren nach Anspruch 11, **gekennzeichnet durch** das Erkennen, ob neue Konfigurationsdaten empfangen wurden, nachdem eine der Verbindungen aufgebaut oder geändert wurde.

## Revendications

1. Procédé de configuration, dans un système de télécommunication incluant des noeuds de réseau central et des noeuds radio, chacun des noeuds radio étant connecté à une pluralité des noeuds de réseau central et présentant des données de configuration pour des liaisons entre le noeud radio et chacun des noeuds de réseau central auxquels il est connecté, les données de configuration incluant des informations indiquant quel noeud parmi lesdits noeuds de réseau central doit être utilisé lorsque le noeud radio reçoit une demande d'appel en provenance d'une station mobile et qu'il doit établir un chemin de communication à travers le noeud radio, dans lequel, lorsque l'une desdites liaisons est établie ou modifiée, des informations de configuration pour la liaison sont envoyées du noeud de réseau central, au niveau d'une extrémité de la liaison au noeud radio à l'extrémité opposée de la liaison, **caractérisé en ce que** lesdites informations de configuration envoyées à partir de l'un des noeuds de réseau central incluent des plages d'identités de stations mobiles pour lesquelles des appels reçus à partir de celles-ci doivent être acheminés du noeud radio respectif audit l'un des noeuds de réseau central.

2. Procédé selon la revendication 1, **caractérisé en ce que** lesdites informations de configuration sont incluses dans une séquence régulière de messages d'établissement de liaison, le procédé permettant ainsi une compatibilité avec des produits existants, ainsi qu'une utilisation conviviale.

3. Procédé selon la revendication 1, **caractérisé en ce que** lesdites informations de configuration envoyées à partir de l'un des noeuds de réseau central incluent des informations concernant la proportion d'appels non acheminables devant être acheminés du noeud radio respectif vers ledit un des noeuds de réseau central.

4. Noeud radio dans un système de télécommunication incluant une pluralité de noeuds de réseau central et présentant des données de configuration pour des liaisons entre le noeud radio et chacun des noeuds de réseau central auxquels il est connecté, les données de configuration incluant des informations indiquant quel noeud parmi lesdits noeuds de réseau central doit être utilisé lorsque le noeud radio reçoit une demande d'appel en provenance d'une station mobile et qu'il doit établir un chemin de communication à travers le noeud radio, une unité pour stocker, lorsque l'une desdites liaisons est établie ou modifiée, des informations de configuration reçues pour la liaison qui sont envoyées à partir du noeud de réseau central au niveau de l'autre extrémité de la liaison, **caractérisé en ce que** lesdites informations de configuration incluent des plages d'identités de stations mobiles pour lesquelles des appels reçus à partir de celles-ci doivent être acheminés du noeud radio respectif au noeud de réseau central.

5. Noeud radio selon la revendication 4, **caractérisé par** un emplacement de mémoire dans lequel une table est stockée, la table conservant, pour chacun des noeuds de réseau central auxquels le noeud radio est connecté, des informations sur les plages d'identités ou identifiants de ces stations mobiles, pour lesquelles stations mobiles, des appels reçus à partir de celles-ci doivent être acheminés à travers le noeud radio vers le noeud de réseau central, ladite unité de stockage étant agencée de manière à stocker les informations de configuration reçues au sein de l'emplacement de mémoire dans un enregistrement respectif de la table.

6. Noeud radio selon la revendication 4, **caractérisé par** une unité de détection destinée à détecter si de nouvelles données de configuration ont été reçues après que l'une desdites liaisons a été établie ou modifiée.

7. Noeud de réseau central dans un système de télécommunication incluant une pluralité de noeuds de réseau central et une pluralité de noeuds radio, chacun des noeuds radio présentant des données de configuration pour des liaisons entre le noeud radio et le noeud de réseau central, les données de configuration incluant des informations concernant les cas dans lesquels le noeud de réseau central doit être utilisé lorsque le noeud radio reçoit une demande d'appel en provenance d'une station mobile et qu'il doit établir un chemin de communication à travers le noeud radio, une unité pour envoyer, lorsque l'une desdites liaisons entre le noeud de réseau central et l'un des noeuds radio est établie ou modifiée, des informations de configuration pour la liaison audit l'un des noeuds de réseau radio, **caractérisé en ce que** l'unité d'envoi est agencée de manière à inclure, dans les informations de configuration envoyées, des plages d'identités ou identifiants de ces stations mobiles, pour lesquelles stations mobiles, des appels reçus à partir de celles-ci doivent être acheminés à travers ledit un des noeuds radio au noeud de réseau central.

8. Noeud de réseau central selon la revendication 7, **caractérisé en ce que** l'unité d'envoi est agencée de manière à envoyer les informations de configuration dans une séquence régulière de messages d'établissement de liaison.

9. Noeud de réseau central selon la revendication 8, **caractérisé par** un emplacement de mémoire dans lequel une table est stockée, la table conservant, pour chacun des noeuds radio auxquels le noeud de réseau central est connecté, des informations sur les plages d'identités ou identifiants de ces stations mobiles, pour lesquelles stations mobiles, des appels reçus à partir de celles-ci doivent être acheminés à travers le noeud radio respectif vers le noeud de réseau central.

10. Noeud de réseau central selon la revendication 8, **caractérisé par** une unité de déduction destinée à déduire, pour chacun des noeuds radio auxquels le noeud de réseau central est connecté, des informations sur les plages d'identités ou identifiants de ces stations mobiles, pour lesquelles stations mobiles, des appels reçus à partir de celles-ci doivent être acheminés à travers le noeud radio respectif vers le noeud de réseau central.

11. Procédé de configuration, dans un système de télécommunication incluant des noeuds de réseau central et des noeuds radio, chacun des noeuds radio étant connecté à une pluralité des noeuds de réseau central et présentant des données de configuration pour des liaisons entre le noeud radio et chacun des noeuds de réseau central auxquels il est connecté, les données de configuration incluant des informations indiquant quel noeud parmi lesdits noeuds de réseau central doit être utilisé lorsque le noeud radio reçoit une demande d'appel en provenance d'une station mobile et qu'il doit établir un chemin de communication à travers le noeud radio, lorsque l'une desdites liaisons est établie ou modifiée, de réception et de stockage des informations de configuration pour la liaison, lesquelles sont envoyées à partir du noeud de réseau central au niveau de l'autre extrémité de la liaison, et caractérisé en :
stockant les informations de configuration reçues au sein d'un emplacement de mémoire dans un enregistrement respectif d'une table, la table conservant, pour chacun des noeuds de réseau central auxquels le noeud radio est connecté, des informations sur les plages d'identités ou identifiants de ces stations mobiles, pour lesquelles stations mobiles, des appels reçus à partir de celles-ci doivent être acheminés à travers le noeud radio au noeud de réseau central.

12. Procédé selon la revendication 11, **caractérisé par** l'étape consistant à détecter si de nouvelles données de configuration ont été reçues après que l'une desdites liaisons a été établie ou modifiée.
